# FASCICULE DE BREVET EUROPEEN

(11) **EP 1 413 814 B1**
(45) Date de publication et mention de la délivrance du brevet: **21.06.2006**
(21) Numéro de dépôt: 03356164.8
(22) Date de dépôt: 24.10.2003
(51) Int. Cl.: F16L 13/14

(54) **Raccord à sertir à sécurité renforcée**
Pressfitting mit erhöhter Sicherheit
Compression fitting with enhanced safety

(30) Priorité: 24.10.2002 FR 0213323
(43) Date de publication de la demande: 28.04.2004
(73) Titulaire: COMAP, 69008 Lyon (FR)
(72) Inventeur: Tuffe, Stéphane, 69740 Genas (FR)
(74) Mandataire: Maureau, Philippe

(56) Documents cités:
- DE-A- 19 945 113
- DE-U- 20 013 425
- RU-C- 2 155 291
- US-A- 5 012 942
- US-A1- 2002 100 540

## Description

La présente invention se rapporte à un raccord présentant au moins une ouverture dans laquelle une extrémité d'un tube à raccorder peut être introduite puis sertie.

Il est déjà connu de la demande de brevet européen EP 1 081 421 de réaliser un raccord sous la forme d'une tubulure de raccordement dont la surface extérieure est revêtue d'une couche de colorant à micro encapsulation. Une extrémité d'un tube à raccorder peut être introduite dans la tubulure de raccordement, puis sertie dans cette dernière, l'opération de sertissage ayant alors pour effet de provoquer l'éclatement des micro capsules qui libèrent ainsi le colorant dans la zone de sertissage. Le monteur peut de ce fait très rapidement contrôler si l'assemblage entre le raccord et le tube a été correctement réalisé.

Il est également connu par le document DE 199 45 13 de déposer sur la tubulure une couche de matière destinée à être visuellement modifiée lors du sertissage, sous forme par exemple d'une bague plastique.

Ce type de dispositif permet effectivement de repérer le sertissage de la tubulure. Toutefois, la bague ne permet pas de s'adapter facilement à différent types de géométrie de la tubulure, et il s'avère difficile de rompre une telle bague.

La présente invention a pour but de proposer un raccord constituant une alternative à celui décrit et revendiqué dans la demande de brevet EP 1 081 421, et concerne à cet effet un raccord comportant au moins une ouverture dans laquelle une extrémité d'un tube à raccorder peut être engagée, et présentant au moins une zone périphérique dans laquelle le tube peut être fixé après une opération de sertissage, caractérisé en ce qu'il est recouvert, au moins au niveau de la zone périphérique, par un manchon réalisé dans une matière plastique thermo rétractable et conçu pour se rompre lors de l'opération de sertissage, le manchon possédant au moins une zone de faiblesse autour de la zone périphérique du raccord.

Ainsi, le monteur qui a procédé à plusieurs opérations de sertissage peut immédiatement constater si les différents raccordements ont été réalisés de manière satisfaisante. En effet, si les manchons se sont tous désagrégés au niveau des zones périphériques, le monteur a l'assurance que les raccordements ont été correctement effectués. En revanche, si des manchons sont toujours présents autour de certaines zones périphériques, cela signifie que les raccordements correspondants n'ont pas été effectués, ou qu'ils l'ont été de façon non conforme.

Avantageusement, la zone de faiblesse peut être constituée par une zone prédécoupée sensiblement en forme de S, ou sensiblement linéaire par exemple.

Selon une variante de l'invention, le raccord est totalement recouvert par le manchon. Dans ce cas, les parties du raccord situées entre deux zones périphériques restent recouvertes par le manchon après les opérations de sertissage.

Préférentiellement, le manchon est réalisé sous la forme d'un film plastique thermo rétractable. Le dépôt du manchon autour du raccord est de ce fait grandement facilité.

Avantageusement, le manchon constitue un moyen de visualisation de la nature du raccord. En effet, le manchon peut avoir par exemple une couleur particulière selon qu'il est destiné à conduire de l'eau ou du gaz. De même, les caractéristiques techniques du raccord peuvent être immédiatement perceptibles en fonction de la couleur et/ou de la texture du manchon utilisé, ou encore en fonction du positionnement du manchon autour du raccord.

Il est à noter qu'un raccord selon l'invention peut également être constitué par un tube à raccorder présentant au moins une extrémité pourvue d'une zone périphérique sur laquelle est disposé un manchon tel que décrit précédemment. Ce tube peut alors être directement serti au niveau de sa zone périphérique sur une extrémité d'un autre tube à raccorder dépourvu d'un tel manchon.

L'invention sera mieux comprise à l'aide de la description détaillée qui est exposée ci-dessous en regard du dessin annexé dans lequel :
La figure 1 est une vue en perspective d'un raccord selon l'invention avant une opération de sertissage.
La figure 2 est une vue en perspective du raccord représenté à la figure 1 après l'opération de sertissage.
Les figures 3 à 6 sont des vues en perspective de raccords selon des variantes de réalisation de la présente invention.

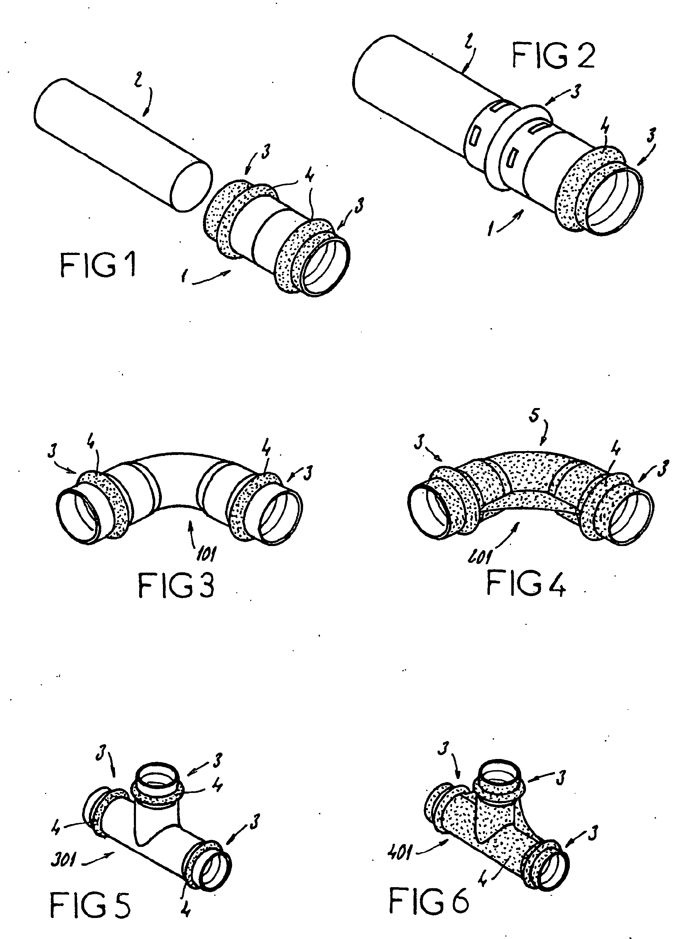

Un raccord 1 selon l'invention, tel que représenté à la figure 1, est constitué par un tube présentant deux extrémités ouvertes dans chacune desquelles peut être introduite une extrémité d'un tube 2 à raccorder. Par ailleurs, ce raccord 1 est conçu de façon à présenter une zone périphérique 3 au voisinage de chacune des deux extrémités ouvertes du raccord 1.

Chacune de ces zones périphériques 3 est recouverte par un manchon 4 qui est réalisé sous la forme d'un film plastique thermo rétractable pouvant être facilement positionné autour du raccord 1. De manière à permettre une fragmentation parfaite du manchon 4 au cours de l'opération de sertissage au niveau de la zone périphérique 3, ce manchon 4 présente au moins une zone de faiblesse (non représentée) pouvant être constituée par une zone prédécoupée sensiblement en forme de S, ou sensiblement linéaire par exemple. Le manchon 4 a une couleur spécifique et constitue ainsi un moyen de visualisation permettant par exemple d'indiquer si le raccord 1 est destiné à être intégré dans une conduite d'eau ou de gaz. Ce moyen de visualisation peut également être utilisé pour donner des indications sur les dimensions du raccord 1, comme son diamètre par exemple.

A la figure 2, le tube 2 est fixé dans le raccord 1 à la suite d'une opération de sertissage réalisée à l'aide d'un outil de pression appliqué autour de la zone périphérique 3 de l'extrémité du raccord 1 dans laquelle l'extrémité du tube 2 est introduite. Le manchon 4 situé autour de la zone périphérique 3 est alors amené à se fragmenter, ce qui permet de garantir à la personne ayant manipulé l'outil de pression que l'opération de sertissage a été correctement effectuée. En revanche, le manchon 4 positionné autour de la zone périphérique 3 de l'autre extrémité ouverte du raccord 1 reste intact puisque aucun raccordement n'a été effectué.

La figure 3 se rapporte à un raccord 101 qui diffère uniquement du raccord 1 par le fait qu'il est coudé.

La figure 4 se rapporte à un raccord 201 qui possède une forme identique à celle du raccord 101, et qui est entièrement recouvert par un unique manchon 4. Dans ce cas, après les opérations de sertissage au niveau des zones périphériques 3, une partie centrale 5 du raccord 201 reste recouverte par le manchon 4.

Les figures 5 et 6 se rapportent à un raccord 301 et à un raccord 401 qui diffèrent des raccords 1, 101 et 201 par le fait qu'ils offrent trois possibilités de raccordement. Comme indiqué précédemment, un manchon 4 peut soit recouvrir uniquement les zones périphériques 3 du raccord 301, comme représenté à la figure 5, soit recouvrir la totalité du raccord 401, comme représenté à la figure 6.

Bien que l'invention ait été décrite en liaison avec des exemples particuliers de réalisation, il est bien évident qu'elle n'y est nullement limitée et qu'elle comprend tous les équivalents techniques des moyens décrits ainsi que leurs combinaisons si celles-ci entrent dans le cadre de l'invention.

## Revendications

1. Raccord (1, 201) comportant au moins une ouverture dans laquelle une extrémité d'un tube (2) à raccorder peut être engagée, et présentant au moins une zone périphérique (3) dans laquelle le tube peut être fixé après une opération de sertissage, recouvert, au moins au niveau de la zone périphérique, par un manchon (4) réalisé dans une matière plastique **caractérisé en ce que** cette matière plastique est thermo rétractable et **en ce que** le manchon est conçu pour se rompre lors de l'opération de sertissage, le manchon (4) possédant au moins une zone de faiblesse autour de la zone périphérique.

2. Raccord (1, 201) selon la revendication 1, **caractérisé en ce que** cette zone de faiblesse est constituée par une zone prédécoupée sensiblement en forme de S.

3. Raccord (1, 201) selon la revendication 1, **caractérisé en ce que** cette zone de faiblesse est constituée par une zone prédécoupée sensiblement linéaire.

4. Raccord (201) selon l'une quelconque des revendications 1 à 3, **caractérisé en ce qu'**il est totalement recouvert par le manchon (4).

5. Raccord (1, 201) selon l'une quelconque des revendications 1 à 4, **caractérisé en ce que** le manchon (4) est réalisé sous la forme d'un film plastique thermo rétractable.

6. Raccord (1, 201) selon l'une quelconque des revendications 1 à 5, **caractérisé en ce que** le manchon (4) constitue un moyen de visualisation de la nature du raccord.

## Claims

1. Connection (1, 201) comprising at least one opening into which one end of a pipe (2) which is to be connected can be fitted, and having at least one peripheral zone (3) in which said pipe can be fixed after a crimping operation, said connection being covered, at least at the peripheral zone, by a sleeve (4) which is made of a plastic material, **characterised in that** the said plastic material is heat-shrinkable and **in that** the sleeve is designed to break when the crimping operation takes place, said sleeve (4) possessing at least one weak zone around the peripheral zone.

2. Connection (1, 201) according to Claim 1, **characterised in that** the said weak zone is constituted by a substantially S-shaped pre-cut zone.

3. Connection (1, 201) according to Claim 1, **characterised in that** the said weak zone is constituted by a substantially linear pre-cut zone.

4. Connection (201) according to any one of Claims 1 to 3, **characterised in that** it is totally covered by the sleeve (4).

5. Connection (1, 201) according to any one of Claims 1 to 4, **characterised in that** the sleeve (4) is produced in the form of a heat-shrinkable plastic film.

6. Connection (1, 201) according to any one of Claims 1 to 5, **characterised in that** the sleeve (4) constitutes a means of displaying the nature of the connection.

## Patentansprüche

1. Anschlussstutzen (1, 201) mit mindestens einer Öffnung, mit der ein Ende eines anzuschließenden Rohrs (2) in Eingriff gebracht werden kann, und der mindestens einen Umfangsbereich (3) aufweist, in dem das Rohr nach einem Quetschvorgang fixiert werden kann, und der zumindest im Bereich des Umfangsbereichs von einer Muffe (4) bedeckt ist, die aus Kunststoff hergestellt ist,
**dadurch gekennzeichnet, dass**
der Kunststoff wärmeschrumpfbar ist, und die Muffe dazu ausgelegt ist, beim Aufquetschvorgang zu brechen, wobei die Muffe (4) mindestens einen Schwachbereich um den Umfangsbereich herum besitzt.

2. Anschlussstutzen (1, 201) nach Anspruch 1,
**dadurch gekennzeichnet, dass**
der Schwachbereich aus einem im Wesentlichen S-förmigen vorausgestanzten Bereich besteht.

3. Anschlussstutzen (1, 201) nach Anspruch 1,
**dadurch gekennzeichnet, dass**
der Schwachbereich aus einem im Wesentlichen linear vorausgestanzten Bereich besteht.

4. Anschlussstutzen (201) nach einem der Ansprüche 1 bis 3,
**dadurch gekennzeichnet, dass**
er von der Muffe (4) vollständig bedeckt ist.

5. Anschlussstutzen (1, 201) nach einem der Ansprüche 1 bis 4,
**dadurch gekennzeichnet, dass**
die Muffe (4) in Form einer wärmeschrumpfbaren Kunststofffolie ausgebildet ist.

6. Anschlussstutzen (1, 201) nach einem der Ansprüche 1 bis 5,
**dadurch gekennzeichnet, dass**
die Muffe (4) eine Visualisierungseinrichtung für die Beschaffenheit des Anschlussstutzens bildet.
